# EUROPEAN PATENT SPECIFICATION

(11) **EP 3 229 305 B1**
(45) Date of publication and mention of the grant of the patent: **08.05.2019**
(21) Application number: 15864473.2
(22) Date of filing: 06.11.2015
(51) Int. Cl.: H01M 10/04, H01M 2/04, H01M 2/06, H01M 2/12, H01M 2/18, H01M 2/26, H01M 2/36, H01M 2/02

(54) **RECTANGULAR SECONDARY BATTERY**
RECHTECKIGE SEKUNDÄRBATTERIE
BATTERIE RECHARGEABLE RECTANGULAIRE

(30) Priority: 04.12.2014 JP 2014245942
(43) Date of publication of application: 11.10.2017
(73) Proprietor: HITACHI AUTOMOTIVE SYSTEMS, LTD., Hitachinaka-shi Ibaraki 312-8503 (JP)
(72) Inventor: TOSHIRO, Hiroyuki, Hitachinaka-shi Ibaraki 312-8503 (JP); ARISHIMA, Yasuo, Hitachinaka-shi Ibaraki 312-8503 (JP)
(74) Representative: MERH-IP Matias Erny Reichl Hoffmann Patentanwälte PartG mbB
(86) International application number: PCT/JP2015/081248
(87) International publication number: WO 2016/088506

(56) References cited:
- EP-A1- 2 958 162
- DE-A1-102013 200 555
- JP-A- 2013 012 428
- JP-A- 2013 211 172
- JP-A- 2013 251 119
- JP-A- 2014 199 780
- US-A1- 2012 171 525

## Description

### Technical Field

The present invention relates to a square secondary battery which is used for a vehicle application, for example.

### Background Art

Conventionally, for example, a square secondary battery such as a lithium-ion secondary battery having a high energy density has been used as a power source of an on-vehicle power source which supply power to an electric motor mounted in a vehicle such as an electric automobile and a hybrid electric automobile or as a power source of other machines. The square secondary battery stores an electrode body which is a power generation element and flatly wound in a square battery container. In the power generation element, an insulative sheet film is wound to electrically insulate the battery container and the power generation element (for example, see PTL 1).

### Citation List

### Patent Literature

PTL 1: WO 2013/027296 A

### Summary of Invention

### Technical Problem

According to PTL 1, it is possible to provide a lithium-ion secondary battery having a structure excellent in productivity, in which the insulative protection film can be simply interposed between the battery container and the power generation element, and a mounting work of the insulative protection film is easily automated. However, in the lithium-ion secondary battery, an electrolyte injected into the battery container freely circulates, through a gap of the insulative protection film, between a space covered by an insulative film where the power generation element is present and a space formed with respect to the battery container outside the insulative protection film.

Therefore, in order to cause the electrolyte to be sufficiently impregnated between the electrodes of the power generation element, the battery container is necessarily injected with the electrolyte appropriately filling a space not only between the insulative protection film and the power generation element but also between the insulative protection film and the battery container. In this case, for example, when the volume of the battery container is increased as the square secondary battery is increased in capacity, the space between the power generation element and the battery container is increased. Therefore, there is a concern that the amount of electrolyte may be increased.

The invention has been made in view of the above problems, and an object thereof is to provide a square secondary battery which is capable of reducing the amount of electrolyte compared to the related art.

Document DE102013200555 discloses a prismatic battery with an electrode group arranged in a bag-like insulating sheet.

### Solution to Problem

In order to achieve the object, square secondary batteries according to appended claims 1 and 3 are provided.

### Advantageous Effects of Invention

According to a square secondary battery of the invention, an electrode group and an electrolyte are stored in a storage member made of a bag-like insulating sheet of which the volume is smaller than a battery can, and an opening of the storage member is sealed by an insulating member. Therefore, there is no need of an extra electrolyte for filling the space between the battery can and the storage member, so that the electrolyte in the storage member can be efficiently impregnated in the electrode group. Therefore, according to the invention, it is possible to provide a square secondary battery which is capable of reducing the amount of electrolyte compared to the related art.

### Brief Description of Drawings

FIG. 1 is a perspective view of the external appearance illustrating a first embodiment of a square secondary battery useful to understand the invention.
FIG. 2 is an exploded perspective view of the square secondary battery illustrated in FIG. 1.
FIG. 3 is a cross-sectional view taken along a line III-III of the square secondary battery illustrated in FIG. 1.
FIG. 4 is an exploded perspective view of an electrode group illustrated in FIG. 2.
FIG. 5 is a plan view of the insulating member illustrated in FIGS. 2 and 3.
FIG. 6 is a plan view illustrating a first modification of the insulating member illustrated in FIG. 5.
FIG. 7 is a plan view illustrating a second modification of the insulating member illustrated in FIG. 5, which results in square secondary batteries according to the invention.
FIG. 8 is an exploded perspective view illustrating a second embodiment of a square secondary battery useful to understand the invention.
FIG. 9 is a plan view of the insulating member illustrated in FIG. 8.
FIG. 10 is a plan view illustrating a modification of the insulating member illustrated in FIG. 8. Description of Embodiments

### (First embodiment)

Hereinafter, a first embodiment of a square secondary battery of the invention will be described with reference to the drawings.

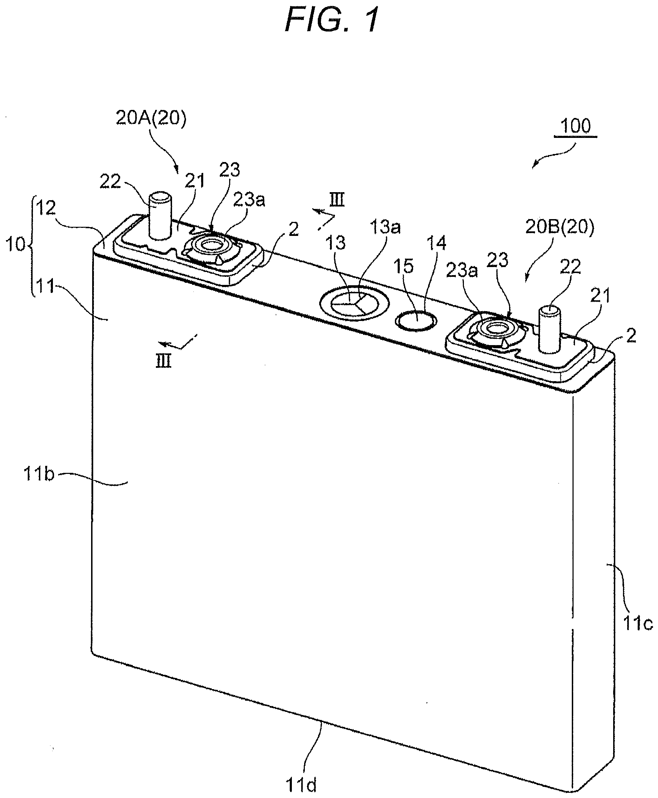

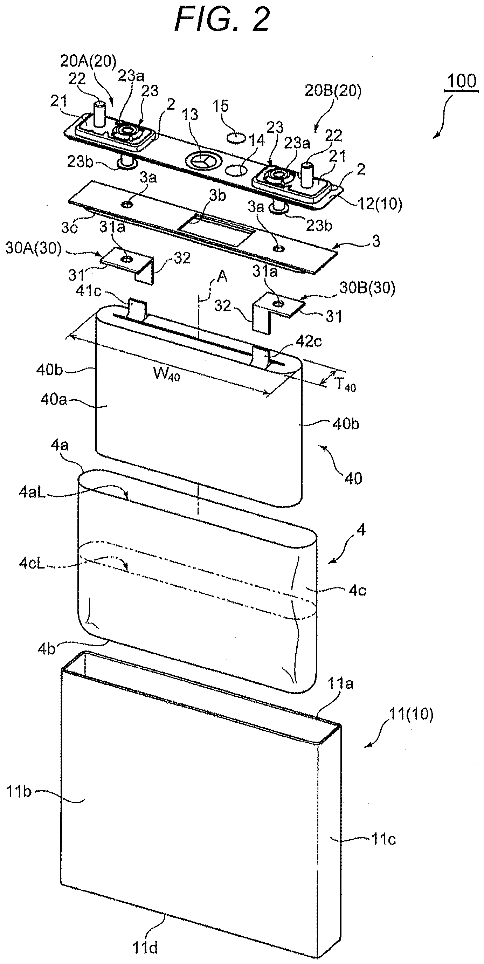

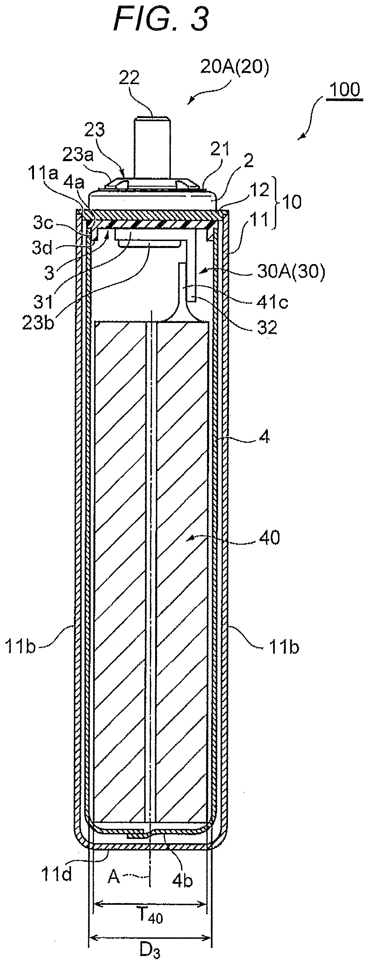

FIG. 1 is a perspective view of the external appearance of a square secondary battery 100 of this embodiment. FIG. 2 is an exploded perspective view of the square secondary battery 100 illustrated in FIG. 1. FIG. 3 is a cross-sectional view taken along a line III-III of the square secondary battery illustrated in FIG. 1.

The square secondary battery 100 of this embodiment includes a flat electrode group 40 manufactured by winding positive and negative electrodes, a flat square battery can 11 storing the electrode group 40, a battery lid 12 sealing an opening 11a of the battery can 11, and an insulating member 3 which is fixed to the battery lid 12 and stored in the battery can 11.

While the details are described below, the square secondary battery 100 of this embodiment has primary features in that a storage member 4 is made of a bag-like insulating sheet, has a volume smaller than that of the battery can 11, and is stored in the battery can 11 to store the electrode group 40 together with an electrolyte, and in that the insulating member 3 adheres to the battery lid 12 to seal a space formed with respect to the battery lid 12, and also be bonded to an opening 4a of the storage member 4 to seal the opening 4a. Hereinafter, a configuration of the square secondary battery 100 of this embodiment will be described in detail.

For example, the battery can 11 is manufactured by performing deep processing on a metal material such as an aluminum alloy, and has a flat shape of a bottomed rectangular cylinder which has the rectangular opening 11a in the upper portion. In other words, the battery can 11 is a housing of a box-liked cuboid, including a wide side wall 11b which has a maximum area on both sides in the thickness direction, a narrow side wall 11c which has a relatively small area on both sides in the width direction, a bottom wall 11d of a rectangular shape having a long side in the width direction in the bottom.

The battery lid 12 is, for example, a plate member of a rectangular shape which is manufactured by a metal material such as an aluminum alloy. The battery lid 12 is, for example, bonded to the opening 11a of the battery can 11 along the entire peripheral edge by the laser welding, seals the opening 11a of the battery can 11, and forms a battery container 10 together with the battery can 11. Positive and negative external terminals 20A and 20B are provided on both ends of a longitudinal direction of the battery lid 12.

The positive and negative external terminals 20A and 20B each include a conductive plate 21, a bolt 22, and a connection terminal 23. The conductive plate 21, the bolt 22, and the connection terminal 23 of the positive external terminal 20A are manufactured by aluminum or an aluminum alloy, for example. The conductive plate 21, the bolt 22, and the connection terminal 23 of the negative external terminal 20B are manufactured by copper or a copper alloy, for example. Hereinafter, in a case where the positive external terminal 20A and the negative external terminal 20B are not necessarily discriminated in particular, these components will be collectively denoted by the external terminal 20.

The conductive plate 21 is a plate member of a rectangular shape in which the longitudinal direction of the battery lid 12 is a long-side direction, and disposed on the battery lid 12 through an insulating member 2. The conductive plate 21 includes a constricted portion in the middle in the longitudinal direction, a through hole in one end in the longitudinal direction where the bolt 22 passes through, and a through hole on the other end in the longitudinal direction where the connection terminal 23 passes through. The head of the bolt 22 is disposed between the insulating member 2 and the conductive plate 21. The bolt 22 passes through the conductive plate 21 from the lower side to protrude to the upper side, and electrically connected to the conductive plate 21. The connection terminal 23 is a cylindrical member which electrically connects the positive and negative external terminals 20A and 20B to positive and negative collector plates 30A and 30B, respectively.

A gas exhaust valve 13 and a liquid injection port 14 are provided in the middle in the longitudinal direction of the battery lid 12. The gas exhaust valve 13 is provided to form a groove 13a obtained by forming the battery lid 12 thin, for example. When an internal pressure of the battery container 10 rises to exceed a predetermined value, the gas exhaust valve is cleaved to discharge the gas in the battery container so as to serve as a safety valve which lowers the internal pressure of the battery container 10. The liquid injection port 14 is used to inject the electrolyte into the battery container 10, and is sealed by welding a liquid injection plug 15 through the laser welding, for example.

The insulating member 3 and the positive and negative collector plates 30A and 30B are fixed to the lower surface of the battery lid 12 (that is, a surface facing the inside of the battery can 11). The insulating members 2 and 3 are, for example, manufactured by a resin material having insulation properties such as polybutylene terephthalate, polyphenylene sulfide, and perfluoroalkoxy flouroresin. The positive collector plate 30A is, for example, manufactured by aluminum or an aluminum alloy, and the negative collector plate 30B is, for example, manufactured by copper or a copper alloy. Hereinafter, in a case where the positive collector plate 30A and the negative collector plate 30B are not necessarily discriminated in particular, these components will be collectively denoted by the collector plate 30.

The insulating member 3 is a plate member of a rectangular shape in which the longitudinal direction of the battery lid 12 is the long-side direction, and includes a through hole 3a where the connection terminal 23 passes through, and an opening 3b through which the gas exhaust valve 13 and the liquid injection port 14 are exposed. In addition, the insulating member 3 of this embodiment includes an annular bonding portion 3c on the lower surface facing the opening 4a of the storage member 4. The annular bonding portion 3c is, for example, bonded to the inside of the opening 4a of the storage member 4, and seals the opening 4a of the storage member 4.

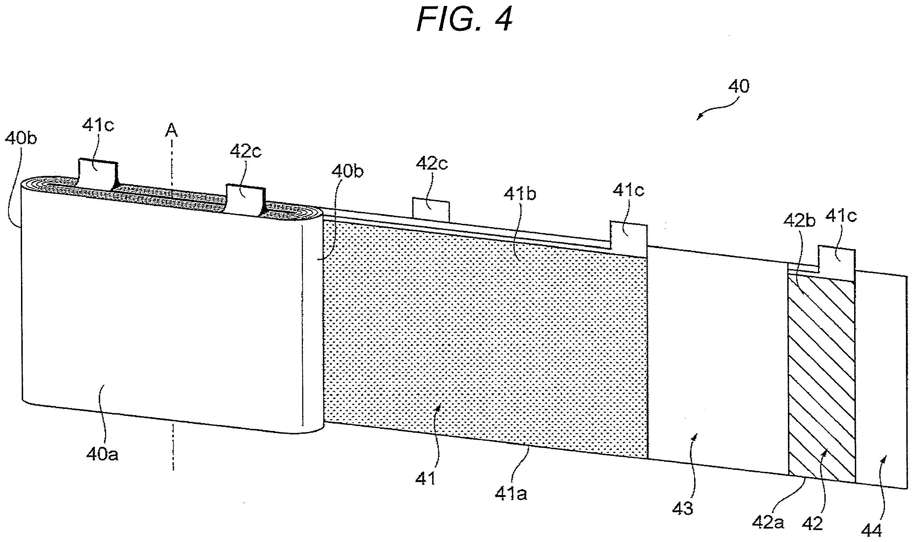

The collector plate 30 includes a base part 31 of a rectangular shape substantially parallel to the battery lid 12 and a rectangular terminal part 32 which is bent on one side of the base part 31 and extends along the wide side wall 11b toward the bottom wall 11d of the battery can 11. The base part 31 of the collector plate 30 includes a through hole 31a where the connection terminal 23 of the external terminal 20 passes through. The terminal parts 32 of the positive and negative collector plates 30A and 30B are, for example, respectively bonded to tab parts 41c and 42c of the electrode group 40 by ultrasonic welding or resistance welding, and electrically connected to positive and negative electrodes 41 and 42 of the electrode group 40 (see FIG. 4).

The external terminal 20, the insulating member 2, the insulating member 3, and the collector plate 30 are caulking-fixed to the battery lid 12 by the connection terminal 23 of the external terminal 20. Specifically, for example, the respective members can be caulking-fixed to the battery lid 12 according to the following sequence. First, the connection terminal 23 is inserted to the through hole of the conductive plate 21 of the external terminal 20, the through hole of the insulating member 2, the through hole of the battery lid 12, the through hole 3a of the insulating member 3, and the through hole 31a of the base part 31 of the collector plate 30.

Next, one end of the connection terminal 23 is plastically deformed in the upper surface of the conductive plate 21 of the external terminal 20 to widen the diameter, and a caulking part 23a is formed. Similarly, the other end of the connection terminal 23 is plastically deformed in the lower surface of the base part 31 of the collector plate 30 to widen the diameter, and a caulking part 23b is formed. Further, the connection terminal 23 may be formed such that one end is integrally provided with the conductive plate 21, and the caulking part 23b is formed only in the other end. Alternatively, the connection terminal may be formed such that the other end is integrally provided with the base part 31 of the collector plate 30, and the caulking part 23a is formed only in the one end.

Therefore, the positive and negative external terminals 20A and 20B, the insulating member 2 and the insulating member 3, and the positive and negative collector plates 30A and 30B are caulking-fixed to the battery lid 12 by the connection terminal 23. In addition, the positive and negative external terminals 20A and 20B are electrically connected to the positive and negative collector plates 30A and 30B by the connection terminal 23, respectively. In addition, the external terminal 20 and the collector plate 30 are electrically insulated from the battery lid 12 by being fixed to the battery lid 12 through the insulating member 2 and the insulating member 3. In addition, the insulating member 3 adheres to the battery lid 12 to seal a space formed with respect to the battery lid 12.

FIG. 4 is an exploded perspective view in which part of the electrode group 40 illustrated in FIG. 2 is developed.

The electrode group 40 is a flat wound electrode group in which the tab parts 41c and 42c formed in the respective collector exposed parts by winding the positive and negative electrodes 41 and 42 around a winding axis A are disposed in one end in the direction of the winding axis A. More specifically, the electrode group 40 is a wound electrode group which is formed in a flat shape by winding the positive and negative electrodes 41 and 42 stacked with the separators 43 and 44 interposed therebetween around a core disposed in parallel with the winding axis A. The separators 43 and 44 are, for example, manufactured by a porous polyethylene resin, and used to insulate the positive electrode 41 and the negative electrode 42 from each other. The outer side of the negative electrode 42 wound on the outermost periphery is also wound by the separator 44.

The electrode group 40 may be manufactured in the following sequence, for example. First, the starting ends of the separators 43 and 44 are welded to a core which is not illustrated, and the separators 43 and 44 and the positive and negative electrodes 41 and 42 are alternately overlapped and wound. At this time, the starting end of the positive electrode 41 is wound in a state of being disposed on a side near the core from the starting end of the negative electrode 42. Therefore, in the electrode group 40 after winding, the starting end of the winding of the positive electrode 41 is located on a side near the core from the starting end of the winding of the negative electrode 42.

In this embodiment, the electrode group 40 is manufactured by winding the positive and negative electrodes 41 and 42 about the winding axis A perpendicular to the battery lid 12. The electrode group 40 includes a flat part 40a in which the positive and negative electrodes 41 and 42 are flatly wound, and a bent part 40b in which the positive and negative electrodes 41 and 42 are bent on both sides of the flat part 40a. The electrode group 40 is disposed such that the flat part 40a faces, the wide side wall 11b of the battery can 11, and the bent part 40b on both sides of the flat part 40a faces the narrow side wall 11c of the battery can 11.

The positive electrode 41 includes a positive electrode foil 41a serving as a positive collector, and a positive mixture layer 41b which is coated on both surfaces of the positive electrode foil 41a and made of a mixture of active materials for the positive electrode. On one side of the positive electrode 41 in the width direction, the positive mixture layer 41b is not formed, and the positive electrode foil 41a is exposed to form a collector exposed part. The collector exposed part is cut out to form a plurality of tab parts 41c. The tab part 41c protrudes in the width direction of the positive electrode 41, and protrudes from the end in the width direction of the separators 43 and 44. A gap between the tab parts 41c is adjusted such that the plurality of tab parts 41c of the positive electrode 41 are collectively bound at a position corresponding to the terminal part 32 of the positive collector plate 30A after winding the electrode group 40.

The positive electrode 41 may be manufactured such that a conductive material, a binding agent, and a dispersant are mixed and kneaded with the active material for the positive electrode to produce a mixture of active materials for the positive electrode, and the mixture is coated on both surfaces of the positive electrode foil 41a except one side in the width direction, and the positive electrode foil is dried, pressed, and cut. As the positive electrode foil 41a, for example, an aluminum foil having a thickness of 15 µm may be used. The thickness of the positive mixture layer 41b excluding the thickness of the positive electrode foil 41a is about 70 µm, for example.

As a material of the mixture of active materials for the positive electrode, for example, nickel cobalt acid lithium (chemical formula: LiNiₓCo_{y}Al_{1-x-y}O₂) having a layered crystal structure of 100 parts by weight, flaky graphite of 10 parts by weight as a conductive material, polyvinylidine fluoride of 10 parts of weight (hereinafter, referred to as PVDF) as a binding agent, and N-methylpyrrolidone (hereinafter, referred to as NMP) as a dispersant may be used. The active material for the positive electrode is not limited to nickel cobalt acid lithium. For example, a layered nickel cobalt lithium manganese (chemical formula: Li (NiₓCo_{y}Mn_{1-x-y}) O₂) called a ternary system active material, or a compound oxide of lithium, nickel, cobalt, and manganese obtained by partially replacing or doping with a metal element may be used. In addition, as the active material for the positive electrode, a lithium cobalt oxide or a lithium titanate having a layered crystal structure, and a lithium-metal compound oxide obtained by partially replacing or doping with a metal element may be mixed and used. In order to obtain a high capacitance, a transition metal compound oxide having a large nickel percentage may be preferably used.

The negative electrode 42 includes the negative electrode foil 42a serving as a negative collector, and a negative mixture layer 42b which is made of a mixture of negative materials for the negative electrode coated on both surfaces of the negative electrode foil 42a. One side of the negative electrode 42 in the width direction becomes a collector exposed part in which the negative electrode foil 42a is exposed without the negative mixture layer 42b, and the collector exposed part is cut out to form the tab part 42c. The tab part 42c protrudes in the width direction of the negative electrode 42, and protrudes from the end of the separators 43 and 44 in the width direction. The plurality of tab parts 42c of the negative electrode 42 are adjusted in gaps between the tab parts 42c to be collectively bound at a position corresponding to the terminal part 32 of the negative collector plate 30B after winding the electrode group 40.

The negative electrode 42 may be manufactured such that a binding agent and a dispersant are mixed and kneaded with an active material for the negative electrode to produce a mixture of negative materials for the negative electrode, and the mixture is coated on both surfaces of the negative electrode foil 42a except one side in the width direction, and the negative electrode foil is dried, pressed, and cut. As the negative electrode foil 42a, for example, a copper foil having a thickness of about 10 µm may be used. The thickness of the negative mixture layer 42b excluding the thickness of the negative electrode foil 42a is about 40 µm, for example.

As a material of the mixture of negative materials for the negative electrode, for example, graphitized carbon powder of 100 parts of weight is used as the active material for the negative electrode, a CMC aqueous solution is added as a viscosity-adjusting agent, and after mixing, an SBR of 1 part by weight is added as a binding agent is added and adjusted in viscosity after being kneaded so as to manufacture a negative electrode slurry. The active material for the negative electrode is not limited to one type of material of the graphitized carbon, and lithium ions may be inserted to use a detachable natural graphite, various types of artificial graphites, an amorphous carbon material such as soft carbon or hard carbon, a compound such as Si or Sn (for example, SiO and TiSi₂), or a composite of these materials. The particle shape of the active material for the negative electrode is also not particularly limited, and can be appropriately selected from a flaky shape, a circular shape, a fiber shape, or a lump shape. In order to obtain a high capacitance, a heterogenous active material is preferably combined to a graphitized carbon to form an active material mixture layer having a high density.

Further, a binder used in the positive and negative mixed layers 41b and 42b is not limited to PVDF. As the binder, for example, a polymer such as polytetrafluoroethylene (PTFE), polyethylene, polystyrene, butadiene rubber, butyl rubber, nitrile rubber, styrene butadiene rubber, polysulfide rubber, nitrocellulose, cyanoethyl cellulose, various types of latex, acrylic nitrile, vinyl fluoride, vinylidene fluoride, propylene fluoride, chloroprene fluoride, and acrylic resin, and a material obtained by kneading these materials may be used as a mixture.

In addition, since the positive electrode 41 and the negative electrode 42 are overlapped and wound with the separators 43 and 44 interposed therebetween, the core may be made by winding a resin sheet having a bending rigidity higher than any one of the positive electrode foil 41a, the negative electrode foil 42a, and the separators 43 and 44.

The width of the negative mixture layer 42b of the negative electrode 42 in the direction of the winding axis A of the electrode group 40 is made wider than the width of the positive mixture layer 41b of the positive electrode 41. In addition, the negative electrode 42 is wound in the innermost periphery and the outermost periphery of the electrode group 40. Therefore, the positive mixture layer 41b is interposed between the negative mixture layers 42b from the innermost periphery to the outermost periphery of the electrode group 40.

In the electrode group 40, the tab parts 41c and 42c (the collector exposed parts of the positive and negative electrodes 41 and 42) are bonded to the terminal parts 32 of the positive and negative collector plates 30A and 30B by the ultrasonic welding or the resistance welding, for example. Therefore, the electrode group 40 is electrically connected to the external terminal 20 through the collector plate 30, and fixed to the battery lid 12 through the insulating member 3. Further, in the direction of the winding axis A of the electrode group 40, the widths of the separators 43 and 44 are made wider than that of the negative mixture layer 42b, and the tab parts 41c and 42c of the positive and negative electrodes 41 and 42 protrude outwardly in the width direction from the ends of the separators 43 and 44 in the width direction, respectively. Therefore, the separators 43 and 44 do not cause trouble when the tab parts 41c and 42c are bound and welded.

The electrode group 40 is stored in the storage member 4 made of the bag-like insulating sheet after being bonded to the collector plate 30. The storage member 4 is, for example, manufactured by an insulating sheet such as polyethylene (PE), polypropylene (PP), polyethylene terephthalate (PET), polytetrafluoroethylene (PTFE), tetrafluoroethylene (PFA), and polyphenylene sulfide (PPS) . The storage member 4 is formed in a bag shape in which a bottom 4b and a side 4c are closed, and the opening 4a is formed in the upper portion.

As illustrated in FIG. 3, the storage member 4 has a volume smaller than the battery can 11, and is stored in the battery can 11 to store the electrode group 40 together with the electrolyte. The opening 4a of the storage member 4 is bonded to the insulating member 3 by thermal welding, an adhesive, or a mechanical holding structure, and tightly closed and sealed by the insulating member 3. The storage member 4 may be formed in a bag shape by the thermal welding to bond the bottom of a cylindrical insulating sheet of which the upper and lower portions are opened. In addition, the storage member 4 may be formed in a bag shape such that two insulating sheets are overlapped and the side end and the lower end are bonded by the thermal welding.

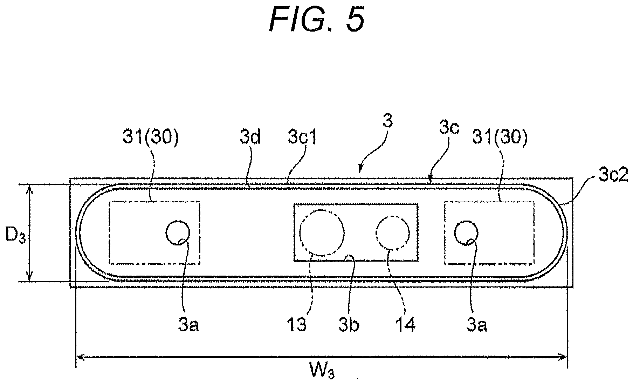

FIG. 5 is a plan view of the insulating member 3 when viewed from the bottom wall lid side of the battery can 11 in a direction parallel with the winding axis A of the electrode group 40.

The insulating member 3 has the annular bonding portion 3c along the outer shape of the electrode group 40 when viewed from a direction parallel with the winding axis A of the electrode group 40. In this embodiment, the annular bonding portion 3c is an outer peripheral surface of a projection 3d which protrudes from the lower surface of the insulating member 3 (that is, a surface of the insulating member 3 facing the inside of the battery can 11) as illustrated in FIG. 3 toward the bottom wall 11d of the battery can 11.

The annular bonding portion 3c has a predetermined height in a height direction of the square secondary battery 100 (that is, a direction perpendicular to the battery lid 12), and is bonded to the inside of the opening 4a of the storage member 4 by thermal welding, an adhesive, or a mechanical holding structure, for example. Further, in a case where the projection 3d is not provided in the insulating member 3, the outer peripheral surface of the insulating member 3 facing the wide side wall 11b and the narrow side wall 11c of the battery can 11 may be used as the annular bonding portion 3c.

As illustrated in FIG. 5, the annular bonding portion 3c includes a straight part 3c1 along the flat part 40a of the electrode group 40 and a curved part 3c2 along the bent part 40b of the electrode group 40 when viewed from a direction parallel with the winding axis A. A width W₃ of the annular bonding portion 3c is desirably set to be equal to or more than a width W₄₀ of the electrode group 40 illustrated in FIG. 2 in the longitudinal direction of the battery lid 12 from the viewpoint of that the storage member 4 is made larger than the electrode group 40 and the electrode group 40 is easily stored in the storage member 4. Similarly, a depth D₃ of the annular bonding portion 3c along the widthwise direction of the battery lid 12 is desirably set to be equal to or more than a thickness T₄₀ of the electrode group 40 illustrated in FIG. 2. In this embodiment, the width W₃ and the depth D₃ of the annular bonding portion 3c are slightly larger than the width W₄₀ and the thickness T₄₀ of the electrode group 40.

On the other hand, in the longitudinal direction of the battery lid 12, the width W₃ of the annular bonding portion 3c is desirably set to be equal to or less than the width W₄₀ of the electrode group 40 from the viewpoint of that the volume of the storage member 4 is made small, and the amount of electrolyte stored in the storage member 4 is made less. Similarly, the depth D₃ of the annular bonding portion 3c along the widthwise direction of the battery lid 12 is desirably equal to or more than the thickness T₄₀ of the electrode group 40.

In this case, after the electrode group 40 is stored in the storage member 4 made of a thermoplastic resin to be a size larger than the electrode group 40, part or all of the storage members 4 are desirably heated to be shrunk so as to bond the opening 4a to the annular bonding portion 3c. For example, when the opening 4a of the storage member 4 is heated and shrunk when being bonding to the annular bonding portion 3c, as illustrated in FIG. 2, a circumference 4aL of the opening 4a is shrunk more than a circumference 4cL of the side 4c which is the intermediate portion between the opening 4a and the bottom 4b.

The insulating member 3 includes the opening 3b at a position corresponding to the liquid injection port 14 of the battery lid 12 inside the annular bonding portion 3c. In addition, the insulating member 3 includes the opening 3b at a position corresponding to the gas exhaust valve 13 (the safety valve) inside the annular bonding portion 3c. In this embodiment, the opening 3b of the insulating member 3 is formed in a rectangular shape as large as to cover the position corresponding to the liquid injection port 14 and the position corresponding to the gas exhaust valve 13.

As illustrated in FIGS. 2 and 3, the storage member 4 is inserted in the opening 11a of the battery can 11 and stored in the battery can 11, in a state where the opening 4a is bonded to the insulating member 3, and in a state where the electrode group 40 is stored in the storage member 4. Thereafter, the battery container 10 is configured such that the opening 11a of the battery can 11 is closed by the battery lid 12 (for example, the entire peripheral edge of the battery lid 12 is welded to the upper end of the battery can 11 by the laser welding) so as to seal the opening 11a of the battery can 11 with the battery lid 12.

Thereafter, a nonaqueous electrolyte is injected into the storage member 4 through the liquid injection port 14 of the battery lid 12 and, for example, the liquid injection plug 15 is bonded to the liquid injection port 14 by the laser welding for sealing. Therefore, the storage member 4 storing the electrode group 40 and the electrolyte is tightly closed. As a nonaqueous electrolyte to be injected into the electrolyte, for example, a solution obtained by dissolving lithium hexafluorophosphate (LiPF₆) at a concentration of 1 mole/liter in a mixed solution in which ethylene carbonate and dimethyl carbonate are mixed at a volume ratio 1:2 may be used.

With the above configuration, the square secondary battery 100 of this embodiment accumulates the power supplied from a power generator in the electrode group 40 through the external terminal 20 and the collector plate 30, and supplies the power accumulated in the electrode group 40 to an external motor through the collector plate 30 and the external terminal 20.

Hereinafter, an operation of the square secondary battery 100 of this embodiment will be described.

As described above, the square secondary battery 100 of this embodiment has a volume smaller than the battery can 11, is stored in the battery can 11, and includes the storage member 4 made of the bag-like insulating sheet which stores the electrode group 40 together with the electrolyte. In addition, the insulating member 3 adheres to the battery lid 12 to seal a space formed with respect to the battery lid 12, and is bonded to the opening 4a of the storage member 4 so as to seal the opening 4a.

For this reason, when the nonaqueous electrolyte is injected into the storage member 4 through the liquid injection port 14 of the battery lid 12, it is prevented that the electrolyte flows out to the space between the battery can 11 and the storage member 4, and the positive and negative electrodes 41 and 42 of the electrode group 40 can be sufficiently permeated and impregnated using a relatively less amount of electrolyte compared to the related art. Therefore, according to the square secondary battery 100 of this embodiment, it is possible to reduce the amount of electrolyte compared to the related art. In addition, even in a case where the volume of the battery can 11 is increased and thus the space between the electrode group 40 and the battery can 11 is increased as the square secondary battery 100 is increased in capacitance and power, it is possible to suppress that the usage amount of electrolyte is increased.

In addition, the square secondary battery 100 of this embodiment is configured such that the positive and negative electrodes 41 and 42 are wound around the winding axis A perpendicular to the battery lid 12, and the tab parts 41c and 42c of the positive and negative electrodes 41 and 42 protrude from the end on a side near the battery lid 12 in the direction of the winding axis A of the electrode group 40. Therefore, the length of the terminal part 32 of the collector plate 30 is shortened to make the space in the battery can 11 increase compared to a case where the winding axis A of the electrode group 40 is disposed in parallel with the battery lid 12, and the volume of the electrode group 40 is increased in proportion to the increased space, so that the square secondary battery 100 can be made large in capacitance.

In addition, in this embodiment, the insulating member 3 includes the annular bonding portion 3c along the outer shape of the electrode group 40 when viewed from a direction parallel with the winding axis A. For this reason, the storage member 4 bonded to the annular bonding portion 3c can be disposed along the outer shape of the electrode group 40, and the space between the electrode group 40 and the storage member 4 is reduced, so that the amount of electrolyte can be reduced. In addition, in this embodiment, the annular bonding portion 3c is bonded inside the opening 4a of the storage member 4. Therefore, when the opening 4a of the storage member 4 is bonded to the annular bonding portion 3c, the storage member 4 is disposed to be covered on the outside of the annular bonding portion 3c, so that the bonding can be easily and securely performed.

In addition, the electrode group 40 includes the flat part 40a in which the positive and negative electrodes 41 and 42 are flatly wound, and the bent part 40b in which the positive and negative electrodes 41 and 42 are bent and wound on both sides of the flat part 40a. Then, the annular bonding portion 3c includes the straight part 3c1 along the flat part 40a of the electrode group 40 and the curved part 3c2 along the bent part 40b of the electrode group 40 when viewed from a direction parallel with the winding axis A. Therefore, the storage member 4 bonded to the annular bonding portion 3c can be disposed along the flat part 40a and the bent part 40b of the electrode group 40. Further, the space between the electrode group 40 and the storage member 4 is reduced, so that the amount of electrolyte can be reduced.

In addition, since the insulating member 3 includes the opening 3b at a position corresponding to the liquid injection port 14 of the battery lid 12 inside the annular bonding portion 3c, the injection of the electrolyte into the storage member 4 is not hindered by the insulating member 3. In addition, since the insulating member 3 includes the opening 3b at a position corresponding to the gas exhaust valve 13 (the safety valve) inside the annular bonding portion 3c, the operation of the gas exhaust valve 13 is not hindered by the insulating member 3 when the internal pressure of the battery container 10 is increased.

The circumference of the opening 4a of the storage member 4 is shrunk shorter than that of the side 4c which is an intermediate portion between the opening 4a and the bottom 4b of the storage member 4. In this case, for example, the opening 4a of the storage member 4 made of the thermoplastic resin is made larger than the electrode group 40. The electrode group 40 is stored in the storage member 4, and then put the opening 4a over the annular bonding portion 3c of the insulating member 3 and the opening 4a is able to be heated and shrunk. Therefore, it is possible to easily store the electrode group 40 into the storage member 4.

As illustrated above, according to the square secondary battery 100 of this embodiment, the amount of electrolyte can be reduced compared to the related art. Further, it is possible to suppress an increase of the amount of electrolyte even in a case where the space between the electrode group 40 and the battery can 11 as the battery is increased in capacity and in power.

Further, the description in this embodiment has been given about the insulating member 3 that is configured to include the rectangular opening 3b at the positions corresponding to the gas exhaust valve 13 and the liquid injection port 14, but the invention is not limited to this configuration of the insulating member 3. Hereinafter, first and second modifications of the insulating member 3 will be described.

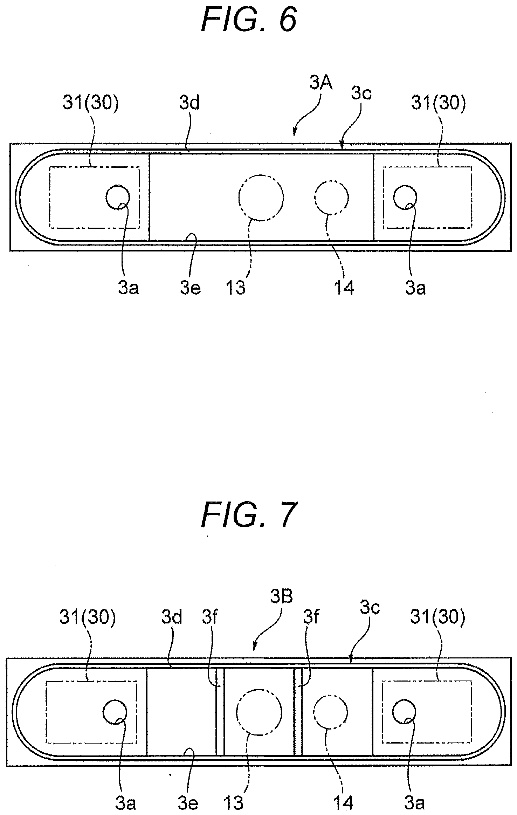

FIG. 6 is a plan view illustrating the first modification of the insulating member 3 illustrated in FIG. 5. An insulating member 3A of this modification is configured such that an opening 3e to expose the battery lid 12 is formed in a space formed with respect to the region where the base part 31 of the collector plate 30 is fixed inside the annular bonding portion 3c. Therefore, the area of the opening 3e can be widened, and the gas exhaust valve 13 and the liquid injection port 14 can be disposed more flexibly. In addition, it is possible to reduce the usage amount of material of the insulating member 3.

FIG. 7 is a plan view illustrating the second modification of the insulating member 3 illustrated in Fig. 5, which results in square secondary batteries according to the invention. An insulating member 3B of this embodiment includes the opening 3e to expose the battery lid 12, which is formed in a space formed with respect to the region where the base part 31 of the collector plate 30 is fixed inside the annular bonding portion 3c, similarly to the insulating member 3A of the first modification. Further, the insulating member 3B includes a rib 3f to reinforce the opening 3e. Therefore, it is possible to improve rigidity and mechanical strength in the vicinity of the opening 3e of the insulating member 3B.

### (Second embodiment)

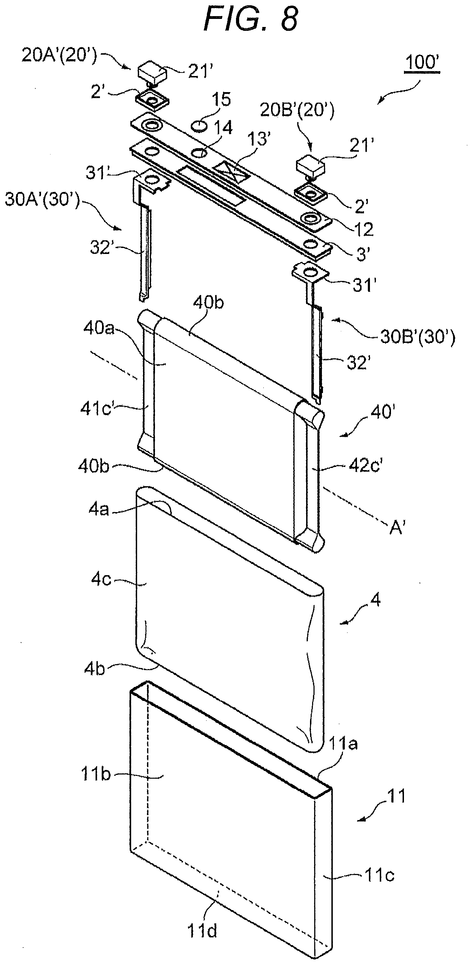

Hereinafter, a second embodiment of the square secondary battery useful to understand the invention will be described using FIGS. 8 to 10 with reference to FIG. 4.

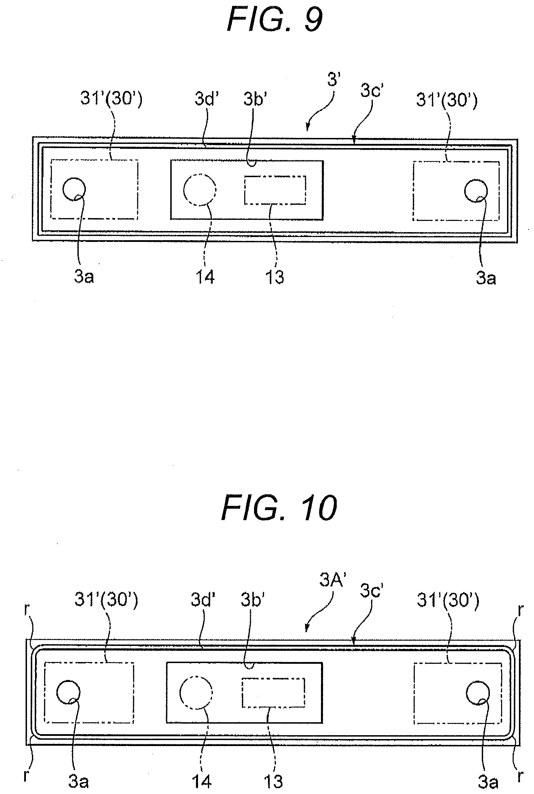

FIG. 8 is an exploded perspective view of a square secondary battery 100' of this embodiment. FIG. 9 is a plan view of an insulating member 3' of this embodiment when viewed from a direction perpendicular to a winding axis A' of an electrode group 40' illustrated in FIG. 8. FIG. 10 is a plan view illustrating a modification of the insulating member 3' illustrated in FIG. 9.

The square secondary battery 100' of this embodiment is different from the square secondary battery 100 of the first embodiment in that the positive and negative electrodes 41 and 42 of the electrode group 40' are wound around the winding axis A' in parallel with the battery lid 12, and in the configurations of an external terminal 20' and a collector plate 30'. Since the other configurations of the square secondary battery 100' of this embodiment are similar to those of the square secondary battery 100 of the first embodiment, the same portions will be denoted by the same symbols, and the descriptions will be appropriately omitted.

In this embodiment, the tab part is not formed in collector exposed parts 41c' and 42c' of the positive and negative electrodes 41 and 42 of the electrode group 40'. The collector exposed parts 41c' and 42c' are disposed on one and the other ends in the width direction of the positive and negative electrodes 41 and 42 in parallel with the winding axis A', respectively. The positive and negative electrodes 41 and 42 are alternately overlapped with the separators 43 and 44, and wound around the winding axis A'. Therefore, the electrode group 40' is configured such that the collector exposed part 41c' of the positive electrode 41 is disposed in one end in the direction of the winding axis A' , and the collector exposed part 42c' of the negative electrode 42 is disposed on the other end in the direction of the winding axis A'.

The external terminal 20' includes a welded bonding part 21' of a block shape such as a cuboid shape. In the lower surface of the welded bonding part, there is provided a cylindrical connection terminal similarly to the connection terminal 23 of the first embodiment. The positive external terminal 20A' is manufactured by aluminum or an aluminum alloy, for example, and the negative external terminal 20B' is manufactured by copper or a copper alloy, for example.

The collector plate 30' includes a base part 31' and a terminal part 32' similarly to the collector plate 30 of the first embodiment. The base part 31' of the collector plate 30' is caulking-fixed to the battery lid 12 by the connection terminal of the external terminal 20' passing through an insulating member 2', the battery lid 12, the insulating member 3', and the through hole of the base part 31' similarly to the collector plate 30 of the first embodiment.

The terminal part 32' of the collector plate 30' is bent on a side of the base part 31', extends toward the bottom wall 11d along the one wide side wall 11b in the battery can 11, is curved in a thickness direction of the electrode group 40 on the way, and extends again toward the bottom wall 11d. The lower-side portions curved in the terminal parts 32' of positive and negative collector plates 30A' and 30B' are bonded to the collector exposed parts 41c' and 42c' bounded at the one end and the other end in the direction of the winding axis A' of the electrode group 40', for example, by the ultrasonic welding or the resistance welding.

Therefore, the electrode group 40' is fixed to the battery lid 12 through the collector plate 30' and the insulating member 3', and is supported in a state where the positive and negative electrodes 41 and 42 are wound around the winding axis A' in parallel with the battery lid 12. The electrode group 40' is a flat wound electrode group which includes the flat part 40a and the bent part 40b similarly to the electrode group 40 of the first embodiment. Therefore, the outer shape of the electrode group 40' viewed from a direction perpendicular to the winding axis A' and to the battery lid 12 is an oblong rectangular shape. As illustrated in FIG. 9, the insulating member 3' of this embodiment includes an annular bonding portion 3c' of a rectangular shape formed along the outer shape of the electrode group 40' viewed from a direction perpendicular to the winding axis A'.

Similarly to the square secondary battery 100 of the first embodiment, the square secondary battery 100' of this embodiment includes the storage member 4 made of the bag-like insulating sheet which has a volume smaller than the battery can 11 and is stored in the battery can 11 to store the electrode group 40' together with the electrolyte. Then, the insulating member 3' adheres to the battery lid 12 and seals a space formed with respect to the battery lid 12, and is bonded to the opening 4a of the storage member 4 to seal the opening 4a.

Therefore, according to the square secondary battery 100' of this embodiment, the amount of electrolyte is reduced similarly to the square secondary battery 100 of the first embodiment compared to the related art. Further, it is possible to suppress an increase in usage amount of electrolyte even in a case where the space between the electrode group 40' and the battery can 11 as the battery is increased in capacity and in power. In addition, since the insulating member 3' includes the annular bonding portion 3c' of the rectangular shape formed along the external shape of the electrode group 40' viewed from a direction perpendicular to the winding axis A', the storage member 4 bonded to the annular bonding portion 3c' can be disposed along the outer shape of the electrode group 40', and the space between the electrode group 40' and the storage member 4 can be reduced, so that the amount of electrolyte can be reduced.

Further, the configuration of the annular bonding portion 3c' of the insulating member 3' is not limited to the configuration illustrated in FIG. 9. For example, as described in the modification illustrated in FIG. 10, an insulating member 3A' may include a curved surface r at the corner by forming the corner of the annular bonding portion 3c' of the rectangular shape to have a curved surface shape. Therefore, when the opening 4a of the storage member 4 is bonded to the annular bonding portion 3c', a gap is hardly generated between the annular bonding portion 3c' and the storage member 4 in the vicinity of the corner of the annular bonding portion 3c' of the rectangular shape, so that the annular bonding portion 3c' and the storage member 4 can easily adhere to each other. Therefore, according to this modification, the annular bonding portion 3c' and the storage member 4 are easily bonded, so that sealability of the opening 4a of the storage member 4 can be improved.

Hitherto, the embodiments of the invention have been described in detail using the drawings, but the specific configurations are limited to these embodiments. Even when there are variations in design within a scope not departing from the scope of the claims, these variations belong to the invention.

### Reference Signs List

3, 3A, 3B, 3', 3A': insulating member
3b, 3b', 3e: opening
3c, 3c': annular bonding portion
3f: rib
3c1: straight part
3c2: curved part
4: storage member
4a: opening
11: battery can
11a: opening
12: battery lid
13: gas exhaust valve (safety valve)
14: liquid injection port
20, 20': external terminal
30, 30': collector plate
40, 40': electrode group
40a: flat part
40b: bent part
41: electrode (positive electrode)
41c: tab part (collector exposed part)
41c': collector exposed part
42: electrode (negative electrode)
42c: tab part (collector exposed part)
42c': collector exposed part
100, 100': square secondary battery
A, A': winding axis

## Claims

1. A square secondary battery, comprising:
a flat electrode group (40) that is manufactured by winding positive and negative electrodes;
a flat square battery can (11) that stores the electrode group (40);
a battery lid (12) that seals an opening of the battery can (11);
an insulating member (3) that is fixed to the battery lid (12) and stored in the battery can (11); and
a storage member (4) made of a bag-like insulating sheet that has a volume smaller than the battery can (11), and is stored in the battery can (11) and stores the electrode group (40) together with an electrolyte,
wherein the battery lid (12) includes a liquid injection port (14) through which the electrolyte is injected, and includes a safety valve (13) that is opened when an internal pressure of the battery can rises up to a predetermined value, and
wherein the insulating member (3) adheres to the battery lid (12) to seal a space formed with respect to the battery lid (12), and is bonded to an opening (4a) of the storage member (4) together to seal the opening (4a), and
wherein the electrode group (40) is configured to wind the positive and negative electrodes (41, 42) around a winding axis perpendicular to the battery lid (12), and
wherein the insulating member (3) includes an annular bonding portion (3c, 3c') that is formed along an outer shape of the electrode group (40) when viewed from a direction parallel with the winding axis, and
wherein the insulating member (3) is configured to include an opening (3b, 3b', 3e) at a position corresponding to the liquid injection port (14) inside the annular bonding portion (3c, 3c'), and a position corresponding to the safety valve (13) inside the annular bonding portion (3c, 3c'), and
wherein the insulating member (3) includes a rib (3f) that reinforces the opening (3b, 3b', 3e) of the insulating member (3).

2. The square secondary battery according to claim 1,
wherein the electrode group (40) includes a flat part (40a) in which the positive and negative electrodes (41, 42) are flatly wound, and a bent part (40b) in which the positive and negative electrodes (41, 42) are bent and wound on both sides of the flat part (40a), and
wherein the annular bonding portion (3c, 3c') includes a straight part (3c1) formed along the flat part (40a) and a curved part (3c2) formed along the bent part (40b) when viewed from a direction parallel with the winding axis.

3. A square secondary battery, comprising:
a flat electrode group (40) that is manufactured by winding positive and negative electrodes;
a flat square battery can (11) that stores the electrode group (40);
a battery lid (12) that seals an opening of the battery can (11);
an insulating member (3) that is fixed to the battery lid (12) and stored in the battery can (11); and
a storage member (4) made of a bag-like insulating sheet that has a volume smaller than the battery can (11), and is stored in the battery can (11) and stores the electrode group (40) together with an electrolyte,
wherein the battery lid (12) includes a liquid injection port (14) through which the electrolyte is injected, and includes a safety valve (13) that is opened when an internal pressure of the battery can rises up to a predetermined value, and
wherein the insulating member (3) adheres to the battery lid (12) to seal a space formed with respect to the battery lid (12), and is bonded to an opening (4a) of the storage member (4) together to seal the opening (4a), and
wherein the electrode group (40) is configured to wind the positive and negative electrodes (41, 42) around a winding axis in parallel with the battery lid (12), and
wherein the insulating member (3) includes an annular bonding portion (3c, 3c') of a rectangular shape formed along an outer shape of the electrode group (40) when viewed from a direction perpendicular to the winding axis, and
wherein the insulating member (3) is configured to include an opening (3b, 3b', 3e) at a position corresponding to the liquid injection port (14) inside the annular bonding portion (3c, 3c'), and a position corresponding to the safety valve (13) inside the annular bonding portion (3c, 3c'), and
wherein the insulating member (3) includes a rib (3f) that reinforces the opening (3b, 3b', 3e) of the insulating member (3).

4. The square secondary battery according to claim 3,
wherein the insulating member (3) is configured such that a corner of the annular bonding portion (3c, 3c') of the rectangular shape is formed in a curved surface shape.

5. The square secondary battery according to any one of claims 1 to 4,
wherein a circumference of the opening of the storage member (4) is reduced more than that of an intermediate portion between the opening and a bottom of the storage member (4).

6. The square secondary battery according to any one of claims 1 to 4, further comprising:
an external terminal (20, 20') that is provided in the battery lid (12); and
a collector plate (30, 30') that is connected to the external terminal (20, 20') and fixed to the battery lid (12) through the insulating member (3),
wherein the electrode group (40) is configured such that collector exposed parts (41c, 41c',42c, 42c') of the positive or negative electrodes are bonded to the collector plate (30A, 30B, 30A', 30B'), and electrically connected to the external terminal (20A, 20B, 20A', 20B') through the collector plate (30A, 30B, 30A', 30B') and fixed to the battery lid (12).

## Patentansprüche

1. Quadratische sekundäre Batterie, die Folgendes umfasst:
eine flache Elektrodengruppe (40), die durch Aufwickeln von positiven und negativen Elektroden hergestellt wird;
ein flaches quadratisches Batteriegehäuse (11), das die Elektrodengruppe (40) aufnimmt;
einen Batteriedeckel (12), der eine Öffnung des Batteriegehäuses (11) abdichtet;
ein isolierendes Element (3), das an dem Batteriedeckel (12) befestigt ist und in dem Batteriegehäuse (11) aufgenommen ist; und
ein Aufnahmeelement (4), das aus einer taschenähnlichen Isolierfolie hergestellt ist, das ein Volumen aufweist, das kleiner als das Batteriegehäuse (11) ist, und in dem Batteriegehäuse (11) aufgenommen ist und die Elektrodengruppe (40) zusammen mit einem Elektrolyt aufnimmt,
wobei der Batteriedeckel (12) eine Flüssigkeitseinspritzöffnung (14), durch die der Elektrolyt eingespritzt wird, enthält und ein Sicherheitsventil (13) enthält, das geöffnet wird, wenn ein Innendruck des Batteriegehäuses auf einen vorgegebenen Wert ansteigt, und
wobei das isolierende Element (3) an dem Batteriedeckel (12) anhaftet, um einen Raum, der bezüglich des Batteriedeckels (12) gebildet ist, abzudichten, und mit einer Öffnung (4a) des Aufnahmeelements (4) verbunden ist, um die Öffnung (4a) abzudichten, und
wobei die Elektrodengruppe (40) konfiguriert ist, die positiven und negativen Elektroden (41, 42) um eine zu dem Batteriedeckel (12) senkrechte Wicklungsachse zu wickeln, und
wobei das isolierende Element (3) einen ringförmigen Verbindungsabschnitt (3c, 3c') enthält, der entlang einer Außenform der Elektrodengruppe (40), wenn er von einer zu der Wicklungsachse parallelen Richtung betrachtet wird, gebildet ist, und
wobei das isolierende Element (3) konfiguriert ist, an einer Position, die der Flüssigkeitseinspritzöffnung (14) entspricht, innerhalb des ringförmigen Verbindungsabschnitts (3c, 3c'), und an einer Position, die dem Sicherheitsventil (13) entspricht, innerhalb des ringförmigen Verbindungsabschnitts (3c, 3c'), eine Öffnung (3b, 3b', 3e) zu enthalten, und
wobei das isolierende Element (3) eine Verstärkungsrippe (3f) enthält, die die Öffnung (3b, 3b', 3e) des isolierenden Elements (3) verstärkt.

2. Quadratische sekundäre Batterie nach Anspruch 1,
wobei die Elektrodengruppe (40) einen flachen Teil (40a), in dem die positiven und negativen Elektroden (41, 42) flach gewickelt sind, und einen gebogenen Teil (40b), in dem die positiven und negativen Elektroden (41, 42) gebogen und gewickelt sind, an beiden Seiten des flachen Teils (40a) enthält, und
wobei der ringförmige Verbindungsabschnitt (3c, 3c') einen geraden Teil (3c1), der entlang des flachen Teils (40a) gebildet ist, und einen gebogenen Teil (3c2), der, wenn er von einer zur Wicklungsachse parallelen Richtung betrachtet wird, entlang des gebogenen Teils (40b) gebildet wird, enthält.

3. Quadratische sekundäre Batterie, die Folgendes umfasst:
eine flache Elektrodengruppe (40), die durch Aufwickeln von positiven und negativen Elektroden hergestellt wird;
ein flaches quadratisches Batteriegehäuse (11), das die Elektrodengruppe (40) aufnimmt;
einen Batteriedeckel (12), der eine Öffnung des Batteriegehäuses (11) abdichtet;
ein isolierendes Element (3), das an dem Batteriedeckel (12) befestigt ist und in dem Batteriegehäuse (11) aufgenommen ist; und
ein Aufnahmeelement (4), das aus einer taschenähnlichen Isolierfolie hergestellt ist, das ein Volumen aufweist, das kleiner als das Batteriegehäuse (11) ist, und in dem Batteriegehäuse (11) aufgenommen ist und die Elektrodengruppe (40) zusammen mit einem Elektrolyt aufnimmt,
wobei der Batteriedeckel (12) eine Flüssigkeitseinspritzöffnung (14), durch die der Elektrolyt eingespritzt wird, enthält und ein Sicherheitsventil (13) enthält, das geöffnet wird, wenn ein Innendruck des Batteriegehäuses auf einen vorgegebenen Wert ansteigt, und
wobei das isolierende Element (3) an dem Batteriedeckel (12) anhaftet, um einen Raum abzudichten, der bezüglich des Batteriedeckels (12) gebildet ist, und mit einer Öffnung (4a) des Aufnahmeelements (4) verbunden ist, um die Öffnung (4a) abzudichten, und
wobei die Elektrodengruppe (40) konfiguriert ist, die positiven und negativen Elektroden (41, 42) um eine Wicklungsachse parallel zu dem Batteriedeckel (12) zu wickeln, und
wobei das isolierende Element (3) einen ringförmigen Verbindurigsabschnitt (3c, 3c') von rechteckiger Form enthält, der, wenn er von einer zu der Wicklungsachse senkrechten Richtung betrachtet wird, entlang einer Außenform der Elektrodengruppe (40) gebildet ist, und
wobei das isolierende Element (3) konfiguriert ist, an einer Position, die der Flüssigkeitseinspritzöffnung (14) innerhalb des ringförmigen Verbindungsabschnitts (3c, 3c') entspricht, und an einer Position, die dem Sicherheitsventil (13) innerhalb des ringförmigen Verbindungsabschnitts (3c, 3c') entspricht, eine Öffnung (3b, 3b', 3e) zu enthalten, und
wobei das isolierende Element (3) eine Verstärkungsrippe (3f) enthält, die die Öffnung (3b, 3b', 3e) des isolierenden Elements (3) verstärkt.

4. Quadratische sekundäre Batterie nach Anspruch 3,
wobei das isolierende Element (3) derart konfiguriert ist, dass eine Ecke des ringförmigen Verbindungsabschnitts (3c, 3c') von rechteckiger Form in einer gekrümmten Oberflächenform gebildet ist.

5. Quadratische sekundäre Batterie nach einem der Ansprüche 1 bis 4,
wobei ein Umfang der Öffnung des Aufnahmeelements (4) stärker verringert wird als der eines Zwischenabschnitts zwischen der Öffnung und einem Boden des Aufnahmeelements (4).

6. Quadratische sekundäre Batterie nach einem der Ansprüche 1 bis 4, das ferner Folgendes umfasst:
einen äußeren Anschluss (20, 20'), der in dem Batteriedeckel (12) vorgesehen ist; und
eine Kollektorplatte (30, 30'), die mit dem äußeren Anschluss (20, 20') verbunden ist und durch das isolierende Element (3) an dem Batteriedeckel (12) befestigt ist,
wobei die Elektrodengruppe (40) derart konfiguriert ist, dass dem Kollektor gegenüber freiliegende Teile (41c, 41c', 42c, 42c') der positiven und negativen Elektroden mit der Kollektorplatte (30A, 30B, 30A', 30B') verbunden sind, und durch die Kollektorplatte (30A, 30B, 30A', 30B') elektrisch an den äußeren Anschluss (20A, 20B, 20A', 20B') angeschlossen sind und an dem Batteriedeckel (12) befestigt sind.

## Revendications

1. Batterie secondaire rectangulaire, comprenant :
un groupe électrode plat (40) qui est fabriqué en enroulant des électrodes positives et négatives ;
une boîte de batterie rectangulaire plate (11) qui stocke le groupe électrode (40) ;
un couvercle de batterie (12) qui ferme de manière étanche une ouverture de la boîte de batterie (11) ;
un matériau isolant (3) qui est fixé au couvercle de batterie (12) et qui est stocké dans la boîte de batterie (11) ; et
un élément de stockage (4) fait d'une feuille isolante semblable à un sac qui présente un volume plus petit que la boîte de batterie (11) et qui est stocké dans la boîte de batterie (11) et stocke le groupe électrode (40) conjointement avec un électrolyte,
dans laquelle le couvercle de batterie (12) inclut un orifice d'injection de liquide (14) à travers lequel l'électrolyte est injecté, et inclut une soupape de sécurité (13) qui est ouverte quand une pression interne de la boîte de batterie monte jusqu'à une valeur prédéterminée, et
dans laquelle l'élément isolant (3) adhère au couvercle de batterie (12) pour fermer de manière étanche un espace formé par rapport au couvercle de batterie (12), et est jointoyé à une ouverture (4a) de l'élément de stockage (4) conjointement pour fermer l'ouverture (4a) de manière étanche, et dans laquelle le groupe électrode (40) est configuré pour enrouler les électrodes positives et négatives (41, 42) autour d'un axe d'enroulement perpendiculaire au couvercle de batterie (12), et
dans laquelle l'élément isolant (3) inclut une portion de jointoyage annulaire (3c, 3c') qui est formée le long d'une forme extérieure du groupe électrode (40), lorsqu'on la voit depuis une direction parallèle à l'axe d'enroulement, et dans lequel l'élément isolant (3) est configuré pour inclure une ouverture (3b, 3b', 3e) à une position correspondant à l'orifice d'injection de liquide (14) à l'intérieur de la portion de jointoyage annulaire (3c, 3c'), et une position correspondant à la soupape de sécurité (13) à l'intérieur de la portion de jointoyage annulaire (3c, 3c'), et
dans lequel l'élément isolant (3) inclut une nervure (3f) qui renforce l'ouverture (3b, 3b', 3e) de l'élément isolant (3).

2. Batterie secondaire rectangulaire selon la revendication 1,
dans laquelle le groupe électrode (40) inclut une partie plate (40a) dans laquelle les électrodes positives et négatives (41, 42) sont enroulées à plat, et une partie cintrée (40b) dans laquelle les électrodes positives et négatives (41, 42) sont cintrées et enroulées sur les deux côtés de la partie plate (40a), et
dans laquelle la portion de jointoyage annulaire (3c, 3c') inclut une partie droite (3c1) formée le long de la partie plate (40a) et une partie incurvée (3c2) formée le long de la partie cintrée (40b) lorsqu'on la voit depuis une direction parallèle à l'axe d'enroulement.

3. Batterie secondaire rectangulaire, comprenant :
un premier groupe électrode (40) qui est fabriqué en enroulant des électrodes positives et négatives ;
une boîte de batterie rectangulaire plate (11) qui stocke le groupe électrode (40) ;
un couvercle de batterie (12) qui ferme une ouverture de la boîte de batterie (11) de manière étanche ;
un élément isolant (3) qui est fixé sur le couvercle de batterie (12) et stocké dans la boîte de batterie (11) ; et
un élément de stockage (4) fait d'une feuille isolante semblable à un sac qui présente un volume plus petit que la boîte de batterie (11) et qui est stocké dans la boîte de batterie (11) et stocke le groupe électrode (40) conjointement avec un électrolyte,
dans laquelle le couvercle de batterie (12) inclut un orifice d'injection de liquide (14) à travers lequel l'électrolyte est injecté, et inclut une soupape de sécurité (13) qui est ouverte quand une pression interne de la boîte de batterie monte jusqu'à une valeur prédéterminée, et
dans laquelle l'élément isolant (3) adhère au couvercle de batterie (12) pour former de manière étanche un espace formé par rapport au couvercle de batterie (12), et est jointoyé à une ouverture (4a) de l'élément de stockage (4) conjointement pour fermer l'ouverture (4a) de manière étanche, et dans laquelle le groupe électrode (40) est configuré pour enrouler les électrodes positives et négatives (41, 42) autour d'un axe d'enroulement parallèle au couvercle de batterie (12), et
dans laquelle l'élément isolant (3) inclut une portion (3c, 3c') de forme rectangulaire formée le long d'une forme extérieure du groupe électrode (40) lorsqu'on la voit depuis une direction perpendiculaire à l'axe d'enroulement, et
dans laquelle l'élément isolant (3) est configuré pour inclure une ouverture (3b, 3b', 3e) à une position correspondant à l'orifice d'injection de liquide (14) à l'intérieur de la portion de jointoyage annulaire (3c, 3c'), et à une position correspondant à la soupape de sécurité (13) à l'intérieur de la portion de jointoyage annulaire (3c, 3c'), et
dans laquelle l'élément isolant (3) inclut une nervure (3f) qui renforce l'ouverture (3b, 3b', 3e) de l'élément isolant (3).

4. Batterie secondaire rectangulaire selon la revendication 3,
dans laquelle l'élément isolant (3) est configuré de telle façon qu'un coin de la portion de jointoyage annulaire (3c, 3c') de la forme rectangulaire est formé avec une forme de surface incurvée.

5. Batterie secondaire rectangulaire selon l'une quelconque des revendications 1 à 4,
dans laquelle une circonférence de l'ouverture de l'élément de stockage (4) est réduite plus que celle d'une portion intermédiaire entre une ouverture et un fond de l'élément de stockage (4).

6. Batterie secondaire rectangulaire selon l'une quelconque des revendications 1 à 4, comprenant en outre :
une borne externe (20, 20') qui est prévue dans le couvercle de batterie (12) ; et
une plaque collectrice (30, 30') qui est connectée à la borne externe (20, 20') et qui est fixée au couvercle de batterie (12) via l'élément isolant (3),
dans laquelle le groupe électrode (40) est configuré de telle façon que les parties collectrices exposées (41c, 41c', 42c, 42c') des électrodes positives ou négatives sont jointoyées à la plaque collectrice (30A, 30B, 30A', 30B'), et électriquement connectées à la borne externe (20A, 20B, 20A', 20B') via la plaque collectrice (30A, 30B, 30A', 30B') et fixées au couvercle de batterie (12).
